# EUROPÄISCHE PATENTSCHRIFT

(11) **EP 0 528 129 B1**
(45) Veröffentlichungstag und Bekanntmachung des Hinweises auf die Patenterteilung: **20.09.1995**
(21) Anmeldenummer: 92109694.7
(22) Anmeldetag: 09.06.1992
(51) Int. Cl.: B60B 33/02, A01B 73/00, A01D 78/10

(54) **Landwirtschaftlich Maschine**
Agricultural machine
Machine agricole

(30) Priorität: 19.07.1991 DE 4124093
(43) Veröffentlichungstag der Anmeldung: 24.02.1993
(73) Patentinhaber: GREENLAND GMBH & CO. KG, D-78244 Gottmadingen (DE)
(72) Erfinder: Gohl, Stefan, W-7703 Rielasingen/Worblingen 2 (DE); Maier, Martin, Dipl.-Ing., W-7702 Gottmadingen (DE)
(74) Vertreter: Grünecker, Kinkeldey, Stockmair & Schwanhäusser Anwaltssozietät

(56) Entgegenhaltungen:
- EP-A- 0 289 972
- WO-A-91/05672
- CH-A- 338 996
- DE-U- 8 914 906
- DE-U- 9 003 696
- DE-U- 9 015 320
- GB-A- 691 526
- GB-A- 924 925
- GB-A- 2 226 485
- US-A- 1 861 919

## Beschreibung

Die Erfindung betrifft eine landwirtschaftliche Maschine der im Oberbegriff des Patentanspruchs 1 angegebenen Art.

Bei aus der Praxis vorbekannten landwirtschaftlichen Maschinen, z.B. bei Heubearbeitungsmaschinen wie Schwadern, sind die Bodenlaufräder am Schwadkreisel fest angeordnet, d.h. weder gesteuert noch eigenlenkbar. Am Fahrgestell vorgesehene Laufräder sind zumindest in bestimmtem Maße eigenlenkbar, wenn der Schwadkreisel in die Arbeitsstellung abgesenkt ist. In der Arbeitsstellung führen die Bodenlaufräder der Schwadkreisel das Fahrgestell. Beim Bewegen des Schwadkreisels in die Transportstellung werden die Laufräder am Fahrgestell mittels Hydraulikzylindern gegen Schwenken verriegelt. Die Hydraulikzylinder werden über ein Ventil angesteuert, sobald die Schwadkreisel ausgehoben werden. Bei Transportfahrt führen nur die Laufräder das Fahrgestell. Wird die Maschine in die Arbeitsstellung gebracht, dann müssen die Laufräder entriegelt werden. Dies erfordert einen unzweckmäßig hohen baulichen Aufwand und birgt die Gefahr in sich, daß der Maschinenführer übersieht, die Laufräder zu verriegeln oder zu entriegeln. Im ersten Fall kann das Fahrgestell dann bei der Transportfahrt seitlich verlaufen (Unfallgefahr). Im zweiten Fall tritt zwischen den Bodenlaufrädern und den Laufrädern eine Zwangsführung ein, die nicht nur zu hohen Belastungen in der Maschine (Beschädigungsgefahr) sondern gegebenenfalls zu einer Beeinträchtigung des Arbeitens der Schwadkreisel führt.

Der Erfindung liegt die Aufgabe zugrunde, eine landwirtschaftliche Maschine der obengenannten Art zu schaffen, bei der die erwähnte Unfall- oder Beschädigungsgefahr auf baulich einfache Weise beseitigt ist.

Die gestellte Aufgabe wird erfindungsgemäß mit den im Patentanspruch 1 angegebenen Merkmalen gelöst.

Bei dieser Ausbildung braucht der Maschinenführer keine besondere Sorgfalt für die Verriegelung oder Entriegelung der Laufräder des Fahrgestells aufzubringen, weil diese selbsttätig verriegelt oder entriegelt werden. Laufradlaständerungen treten zwangsweise dann auf, wenn das Arbeitswerkzeug in die Transportstellung gebracht wird und das Fahrgestell belastet, weil es den Bodenkontakt verliert, bzw. wenn das Arbeitswerkzeug in die Arbeitsstellung gebracht wird und Bodenkontakt hat und das Fahrgestell entlastet. Die Laständerungen werden zum automatischen Verriegeln bzw. Entriegeln der Laufräder eingesetzt. Die Unfallgefahr und die Beschädigungsgefahr sind gebannt, weil die Laufräder bei Transportfahrt zuverlässig verriegelt sind, so daß das Fahrgestell nicht seitlich ausweichen kann, während bei Arbeitsfahrt die entriegelten Laufräder eine Zwangsführung ausschließen. Die Federkraft ist eine Referenzkarft zur Laufradlast bzw. Gewichtsverlagerung bzw. Gewichtsänderung am Fahrgestell.

Es ist zwar aus WO 91/05672 ein mehrrädriger Einkaufswagen bekannt, bei dem die beiden vorderen, um vertikale Achsen verdrehbaren Laufräder bei entsprechender Füllung des Einkaufswagens einfedern und dann in einer Stellung verriegelt werden, in der der Einkaufswagen nur in Längsrichtung fährt. Jedoch enthält die WO 91/05672 keine Anregung, dieses Verriegelungsprinzip für das Laufrad am Fahrgestell einer von einem Schlepper gezogenen Maschine zu verwenden. Die Verwendung liegt auch nicht nahe, weil eine von einem Schlepper gezogenen Maschine mit ihrem Fahrgestell weder gefüllt wird noch ihr Gesamtgewicht verändert.

Zweckmäßigerweise ist für jedes Laufrad gemäß Anspruch 2 eine eigene Verriegelungsvorrichtung vorgesehen.

Eine baulich einfache, robuste und zuverlässige Ausführungsform geht ferner aus Anspruch 3 hervor. Die Laufradlaständerungen, die gegen die Feder wirksam werden, sorgen automatisch für das Aufsuchen der beiden vertikalen Relativlagen zwischen der Achse und der Führhülse, in denen die Drehkupplung entweder ihr zugeordnetes Laufrad verriegelt oder zur Schwenkung freigibt. Es ist dies eine einfache mechanische Konstruktion mit wenigen Einzelteilen.

Bei der Ausführungsform gemäß Anspruch 4 wird der Vorsprung im Verriegelungsteil der Kulisse bei hoher Auflast des Fahrgestells so positioniert, daß eine Schwenkbewegung der Achse in der Führhülse unterbunden wird. Unter der in der Arbeitsstellung auftretenden Entlastung des Fahrgestells gelangt der Vorsprung selbsttätig in den Schwenkteil der Kulisse, so daß der Achse zumindest eine begrenzte Schwenkbeweglichkeit ermöglicht wird. Die Kulisse könnte auch in der Achse angeordnet sein, während der Vorsprung an der Führhülse angeordnet wird. Denkbar ist es ferner, die Kulisse am unteren Ende der Führhülse nach unten offen auszubilden, so daß der Vorsprung an der Achse in der Arbeitsstellung vollständig aus der Führhülse nach unten austritt. Gegebenenfalls sind dann zwischen der Achse und der Führhülse andere Mittel zur Begrenzung des Schwenkbereichs der Achse vorgesehen. Ferner ist es möglich, die Führhülse fest mit dem Laufrad zu verbinden und die Achse am Fahrgestell zu befestigen.

Zum Vermeiden einer Zwangsführung zwischen den Bodenlaufrädern des Arbeitswerkzeugs und den Laufrädern des Fahrgestells reicht eine begrenzte Schwenkbeweglichkeit der Laufräder nach jeder Seite aus, gemäß Anspruch 5. In der Praxis hat es sich als zweckmäßig erwiesen, einen gesamten Schwenkbereich von ca. 90° vorzusehen.

Damit die Verriegelung der Laufräder verschleißarm und zuverlässig abläuft, sind die Merkmale von Anspruch 6 zweckmäßig. Unter der Laufradlaststeigerung wird der Vorsprung bei schrägstehendem Laufrad entlang einer Führungsrampe in den Verriegelungsteil geführt, wobei das Laufrad in Fahrtrichtung gesstellt wird. In der Arbeitsstellung kann das Laufrad bei der Entlastung des Fahrgestells sofort seitlich bewegt werden, sobald der Vorsprung aus dem Verriegelungsteil ausgetreten ist. Der Verriegelungsteil kann relativ lang ausgebildet sein, um bei Transportfahrt fahrbedingte Eigenbewegungen des Fahrgestells zu kompensieren und das Laufrad nicht ungewollt freizugeben.

Eine stabile Verriegelung und eine Kraftaufteilung beim Verriegeln sind bei der Ausführungsform gemäß Anspruch 7 sichergestellt.

Besonders zweckmäßig ist ferner die Ausführungsform gemäß Anspruch 8. Die Höhenblockiervorrichtung ist eine Sicherheitseinrichtung, die der Maschinenführer benutzen kann, um fahrbedingten Schwingbewegungen des Fahrgestells entgegenzuwirken und zu verhindern, daß die Laufrädern sich selbsttätig entriegeln.

Baulich einfach ist ferner die Ausführungsform gemäß Anspruch 9.

Bei der Ausführungsform gemäß Anspruch 10 ist eine individuelle Anpassung der Federvorspannung an die jeweiligen Gegebenheiten möglich.

Bei der Ausführungsform gemäß Anspruch 11 wird die Verriegelungsvorrichtung sozusagen in ihrer Verriegelungsstellung blockiert, indem der Steckbolzen entsprechend eingesetzt wird.

Dieses Blockieren bzw. Freigeben der Verriegelungsvorrichtung für die Arbeitsfahrt läßt sich bei der Ausführungsform gemäß Anspruch 12 einfach durchführen.

Die Manipulation des Steckbolzens ist schließlich bei der Ausführungsform von Anspruch 13 einfach. Der Steckbolzen ist zweckmäßigerweise unverlierbar an die Achse oder die Führhülse angehängt.

Eine Ausführungsform des Erfindungsgegenstandes wird anhand der Zeichnungen erläutert. Es zeigen:
- Fig. 1A,1B: eine landwirtschaftliche Maschine in einer schematischen Draufsicht, wobei die rechte Hälfte (Fig. 1A) die Arbeitsstellung und die linke Hälfte (Fig. 1B) die Transportstellung repräsentieren,
- Fig. 2A,2B: ein Detail in zwei unterschiedlichen Einstellagen, und
- Fig. 3: einen Längsschnitt einer Laufradhalterung am Fahrgestell.

Eine landwirtschaftliche Maschine H, insbesondere eine Heubearbeitungsmaschine, im vorliegenden Fall ein mit zwei Schwadkreiseln K ausgestatteter Schwader A, ist an ein Schleppfahrzeug S, und zwar an dessen Zugpendel oder Ackerschiene 1 angebaut. Die Maschine H weist ein Fahrgestell F auf, das einen vorderen Ouerbalken 2, einen mittigen Längsträger 3 und einen hinteren Querbalken 4 besitzt. Zwischen den Querbalken 2 und 4 stehen vom Längsträger 3 seitliche Tragarme 5 für die als Schwadkreisel K ausgebildeten Arbeitswerkzeuge ab. Jeder Schwadkreisel K weist einen Antriebs-Tragarm 6 auf, der am Tragarm 5 um eine annähernd in Fahrtrichtung liegende Achse 7 schwenkbar gelagert ist. Mit 10 ist ein Getriebekasten angedeutet. An der Unterseite des Getriebekastens 10 ist ein Fahrwerk 8 mit Bodenlaufrädern 9 fest angebracht. Die Bodenlaufräder 9 sind, z.B., nicht lenkbar. Andere Arten von Arbeitswerkzeugen könnten auch direkt auf dem Boden aufstehen, oder über Kufen, Gleitteller oder dgl.

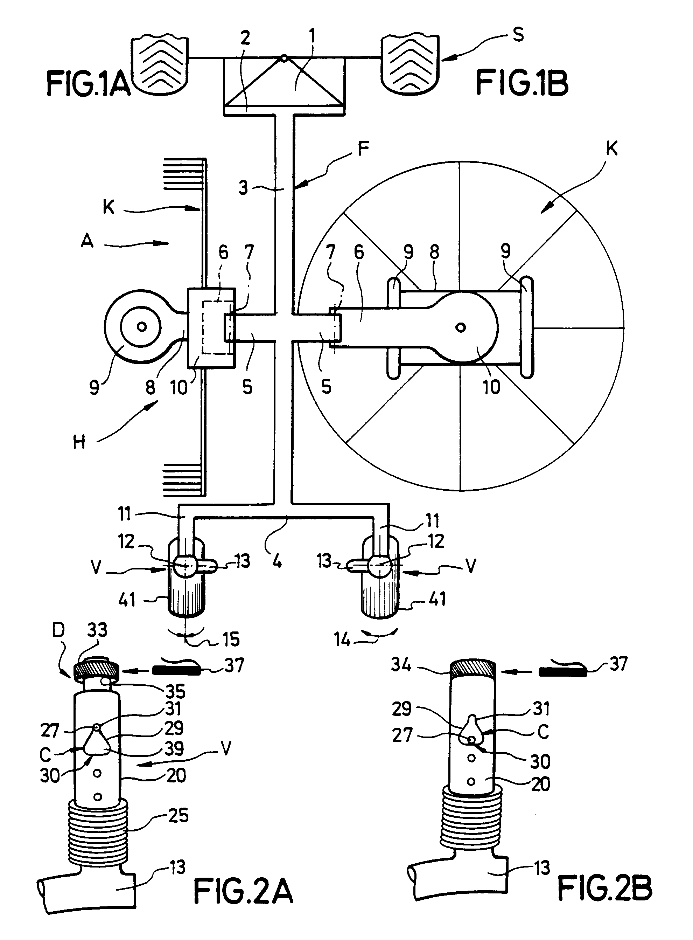

Mit nicht dargestellten Einrichtungen läßt sich jeder Schwadkreisel K aus einer Arbeitsstellung, in der seine Bodenlaufräder 9 auf dem Boden aufstehen, in eine hochgeschwenkte Transportstellung verschwenken. In Fig. 1A ist der linke Schwadkreisel K in der Transportstellung gezeigt, in der seine Bodenlaufräder 9 vom Boden abgehoben sind und sein Gewicht das Fahrgestell T belastet. In Fig. 1B ist der rechte Schwadkreisel K in der Arbeitsstellung dargestellt, in der die Bodenlaufräder 9 sein Gewicht tragen.

Am Querbalken 4 sind beidendig nach hinten ragende Ausleger 11 angeordnet, an denen um annähernd vertikale Achsen 12 Laufräder 41 schwenkbar am Radträger 13 gelagert sind. Für jedes Laufrad 41 ist eine eigene selbsttätige Verriegelungsvorrichtung V vorgesehen. In der Transportstellung (Fig. 1A) verriegelt die Verriegelungsvorrichtung V das zugeordnete Laufrad 41 gegen eine Schwenkbewegung um die Achse 12 (bei 15 angedeutet). In der Arbeitsstellung der Schwadkreisel K gibt die Verriegelungsvorrichtung V hingegen das ihr zugeordnete Laufrad 41 zu einer Schwenkbewegung in Richtung eines Doppelpfeiles 14 um die Achse 12 frei. Es könnte auch nur ein Laufrad 41 vorgesehen sein.

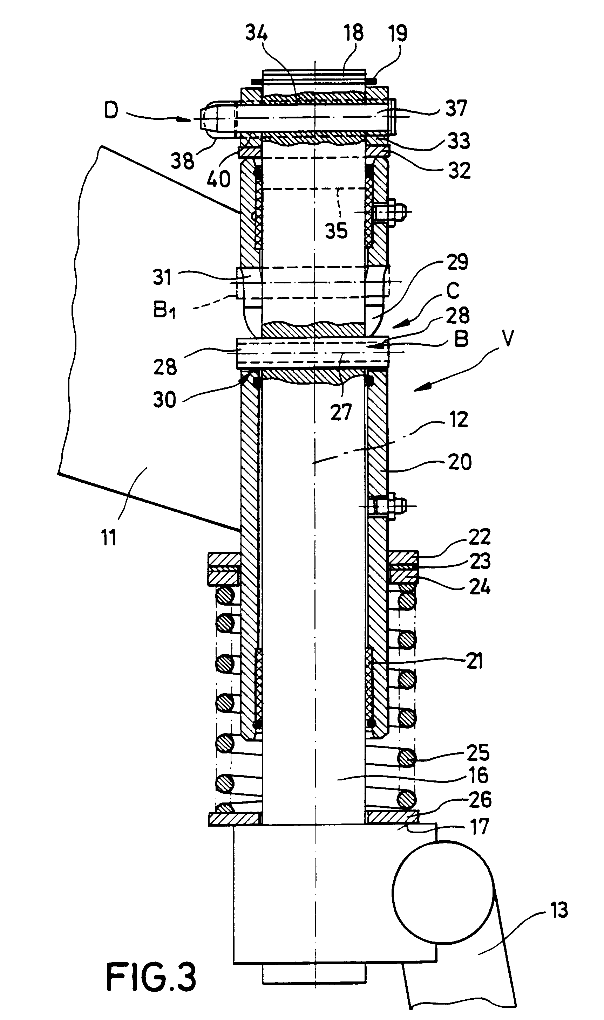

Die Verriegelungsvorrichtung V ist aus Fig. 3 im Detail entnehmbar.

Der Radträger 13 ist am unteren Ende einer annähernd vertikalen Achse 16 angebracht, die unten durch eine Schulter 17 begrenzt wird und mit ihrem oberen freien Ende 18 eine Führhülse 20 vertikal verschiebbar und drehbar durchsetzt. Die Fuhrhülse 20 ist am Ausleger 11 befestigt. Am oberen Ende 18 der Achse 16 ist ein Sicherungsring 19 angeordnet. Die Führhülse 20 weist innen Gleitlager 21 und außen ein festes Federwiderlager 22 auf, das über einen Gleitbelag 23 ein drehbares Federwiderlager 24 abstützt. Eine Feder 25, vorzugsweise eine Schraubendruckfeder, ist zwischen der Schulter 17 und dem drehbaren Federwiderlager 24 angeordnet. Das untere Ende der Feder 25 ruht auf einer Federplatte 26. Die Feder 25 ist vorgespannt und in ihrer Vorspannung verstellbar. Die Federkraft ist so eingestellt, daß die Feder unter der Auflast des Fahrgestells bei in der Transportstellung befindlichen Schwadkreiseln K zusammengedruckt wird, sobald die Achse 16 relativ zur Führhülse 20 nach oben geschoben ist. Hingegen ist die Feder stark genug und so vorgespannt, daß sie bei der Entlastung des Fahrgestells nach Absenken der Schwadkreisel K in die Arbeitsstellung die Führhülse 20 mit dem Fahrgestell F relativ zur Achse 16 hochdrückt.

Zwischen der Führhülse 20 und der Achse 16 ist eine Drehkupplung C vorgesehen (Fig. 2A und 2B), wobei Fig. 2A die Verriegelungsstellung und Fig. 2B die Entriegelungsstellung der Drehkupplung C repräsentieren.

In der Achse 16 ist ein Anschlag B, vorzugsweise ein Querbolzen 27 angeordnet, dessen freie Enden 28 in diametral gegenüberliegende Kulissen 30 der Führhülse 20 ständig eingreifen. Jede Kulisse 30 besitzt schräg oder gerundete, Führungsrampen bildende Seitenwände 29, die einen Verriegelungsteil 31 mit einem Schwenkteil 39 verbinden. Der Verriegelungsteil 31 ist in Umfangsrichtung etwa so breit wie das freie Ende 28 des Querbolzens 27 und in vertikaler Richtung mindestens so hoch wie das freie Ende 28, ehe sogar höher. Der Schwenkteil 30 läßt eine Drehbewegung der Achse 16 um ca. 45° nach jeder Seite zu. Die Seitenwände 29 führen bei einer Schrägstellung des Laufrades 41 in der Arbeitsstellung die freien Enden 28 unter Geradestellen des Laufrads 41 in den Verriegelungsteil 31, wenn die Transportstellung eingestellt ist.

In Fig. 3 ist in ausgezogenen Linien die entriegelte Stellung der Drehkupplung C gezeigt, in der der Querbolzen 27 im Schwenkteil 39 der Kulisse 30 liegt. Strichliert ist die Position des Querzapfens 27 in der Transportstellung gezeigt, in der der Querbolzen 27 im Verriegelungsteil 31 angelangt ist (Postition B1).

Auf dem oberen Ende der Fuhrhülse 20 liegt eine Anschlagring 32 für einen Sicherungsring 33, der durch den Sicherungsring 19 begrenzt auf dem oberen Ende 18 der Achse 16 verschiebbar ist. Im oberen Ende 18 sind zwei axial beabstandete Bohrungen 34, 35 für einen Steckbolzen 37 vorgesehen. Im Sicherungsring 33 ist ebenfalls eine Bohrung 40 für den Steckbolzen 37 vorgesehen. Mit dem Steckbolzen 37 ist eine Federsicherung 38 vereinigt. Der Steckbolzen 37 bildet mit dem Sicherungsring 33 und den Bohrungen 34 und 35 eine Höhenblockiervorrichtung D für die Achse 16.

In der Arbeitsstellung der Schwadkreisel K drückt die Feder 25 die Führhülse 20 so weit nach oben, daß der Querbolzen 27 im Schwenkbereich 39 der Kulisse 30 liegt. Das Laufrad 14 kann zu beiden Seiten eine Schwenkbewegung ausführen. Der Steckbolzen 37 befindet sich in der Bohrung 34 gemäß Fig. 3.

Werden die Schwadkreisel K in die Transportstellung gebracht, dann werden die Feder 25 zusammengedrückt und der Querbolzen 27 in den Verriegelungsteil 31 geschoben.

Das Laufrad 41 ist selbsttätig verriegelt und in Fahrtrichtung ausgerichtet. Zusätzlich kann der Fahrzeugführer den Steckbolzen 37 herausziehen (Fig. 2A), den Sicherungsring 33 auf die Bohrung 35 ausrichten, den Steckbolzen 37 durch die Bohrung 35 und die Bohrung 40 des Sicherungsrings 33 stecken und so die Verriegelungsvorrichtung V für die Transportfahrt in Höhenrichtung blockieren. Bei der Umstellung in die Arbeitsstellung wird der Steckbolzen 37 wieder herausgezogen und in die obere Bohrung 34 eingesteckt.

Die Blockiervorrichtung D könnte auch weggelassen oder durch eine einfache Federverrastung ersetzt werden, die für die Transportfahrt sicherstellt, daß die Laufräder nicht durch fahrbedingte Schwingbewegungen des Fahrgestells vorübergehend lenkbar werden.

## Patentansprüche

1. Landwirtschaftliche Maschine mit einem an einen Schlepper (3) anhängbaren Fahrgestell (F) mit wenigstens einem, um eine annähernd vertikale Achse (12) verschwenkbaren und relativ zum Fahrgestell (F) in wenigstens einer bestimmten Transportlaufrichtung verriegelbaren Laufrad (41), und mit wenigstens einem am Fahrgestell (F) zwischen einer abgesenkten Arbeitsstellung und der hochgeschwenkten Transportstellung bewegbaren Arbeitswerkzeug, insbesondere einem Zinkenkreisel, das in der Arbeitsstellung auf dem Boden mittels eines eigenen Bodenlaufrads (9) abgestützt ist, **gekennzeichnet durch** eine durch die Gewichtsverlagerung beim Bewegen des Arbeitswerkzeugs (K) zwischen der Arbeits- und der Transportstellung ein- und ausrückbare, im Ausrücksinn durch Federkraft vorgespannte Verriegelungsvorrichtung (V) für die Schwenkachse (12) des Laufrades (41), deren Federkraft auf die auf das Laufrad (41) einwirkende Differenz zwischen der durch die Gewichtsverlagerung am Fahrgestell bedingten Laststeigerung und der Lastverringerung eingestellt ist.

2. Maschine nach Anspruch 1, **dadurch gekennzeichnet**, daß bei mehreren Laufrädern (41) für jedes Laufrad (41) eine eigene Verriegelungsvorrichtung (V) vorgesehen ist, deren Federkraft auf einen der Anzahl der Laufräder entsprechenden Anteil der Differenz eingestellt ist.

3. Maschine nach den Ansprüchen 1 und 2, **dadurch gekennzeichnet**, daß das Laufrad (41) an einer vertikalen Achse (16) angeordnet ist, daß die Achse (16) in einer Führhülse (20) des Fahrgestells (F) (F) begrenzt vertikal verschiebbar und drehbar gelagert ist, daß zwischen der Achse (16) und der Führhülse (20) eine Drehkupplung (C) (C) vorgesehen ist, die in einer ersten vertikalen Relativlage zwischen der Achse (16) und der Führhülse (20) die Achse (16) drehfest mit der Führhülse (20) kuppelt und in einer zweiten vertikalen Relativlage zwischen der Achse (16) und der Führhülse (20) die Achse (16), vorzugsweise begrenzt, zur Drehung freigibt, und daß zwischen der Führhülse (20) und dem Laufrad (41) eine gegen die Auflast des Fahrgestells (F) wirkende Feder (25) angeordnet ist.

4. Maschine nach Anspruch 3, **dadurch gekennzeichnet**, daß die Drehkupplung (C) wenigstens einen radialen Vorsprung (B) an der Achse (16) und wenigstens eine Kulisse (30) in der Führhülse (20) aufweist, in die der Vorsprung (B) ständig eingreift, und daß die Kulisse (30) einen den Vorsprung (B) ohne nennenswertes Umfangsspiel fassenden Verriegelungsteil (31) und einen in vertikaler Richtung vom Verriegelungsteil (31) beabstandeten und den Vorsprung (B) in Umfangsrichtung freigebenden Schwenkteil (39) aufweist.

5. Maschine nach Anspruch 4, **dadurch gekennzeichnet**, daß der Schwenkteil (39) den Drehbereich des Vorsprungs (B) nach jeder Seite begrenzt, vorzugsweise mit ca. jeweils 45°.

6. Maschine nach Anspruch 4, **dadurch gekennzeichnet**, daß seitliche Begrenzungswände (29) der Kulisse (30) als schräge, in den Verriegelungsteil (31) einlaufende Führungsrampen für den Vorsprung (B) ausgebildet sind, und daß der Verriegelungsteil (31) in vertikaler Richtung mindestens so lang ist wie der Vorsprung (B).

7. Maschine nach Anspruch 4, **dadurch gekennzeichnet**, daß der Vorsprung (B) ein die Achse (16) durchsetzender Bolzen (27) ist, dessen beide freien Enden (28) in in der Führhülse (20) diametral gegenüberliegende Kulissen (30) eingreifen.

8. Maschine nach Anspruch 3, **dadurch gekennzeichnet**, daß zwischen der Führhülse (20) und der Achse (16) zusätzlich eine, vorzugsweise manuell betätigbare, Höhenblockiervorrichtung (D) vorgesehen ist.

9. Maschine nach Anspruch 3, **dadurch gekennzeichnet**, daß die Feder (25) eine vorgespannte Schraubendruckfeder ist, deren oberes Ende (18) an einem äußeren, drehbaren Widerlager (24) der Führhülse (20) und deren unteres Ende auf einer an der Achse (16) angeordneten Schulter (17) aufsteht.

10. Maschine nach Anspruch 9, **dadurch gekennzeichnet**, daß das Widerlager (24) oder/und die Schulter (17) zum Verändern der Federvorspannung verstellbar ist (sind).

11. Maschine nach Anspruch 8, **dadurch gekennzeichnet**, daß die Achse (16) mit ihrem oberen Ende (18) die Führhülse (20) überragt, und daß im oberen Ende (18) der Achse (16) zwei vertikal beabstandete Anschläge, vorzugsweise Bohrungen (34, 35), für ein wahlweise umsetzbares Blockierteil, vorzugsweise einen Steckbolzen (37), angeordnet sind.

12. Maschine nach Anspruch 10, **dadurch gekennzeichnet**, daß am oberen Ende (18) der Achse (16) ein Sicherungsring (33) begrenzt verschiebbar angeordnet ist, der eine Durchgangsbohrung (40) für den Steckbolzen (37) aufweist.

13. Maschine nach Anspruch 12, **dadurch gekennzeichnet**, daß am Steckbolzen (37) eine Federsicherung (38) angebracht ist.

## Claims

1. Agricultural machine, having a chassis (F) which is attachable to a tractor (3), at least one running wheel (41) which is pivotable about an approximately vertical axis (12) and is lockable relative to the chassis (F) in at least one specific travelling position, and at least one processing tool, more especially a tined rotor, which is displaceable on the chassis (F) between a lowered working position and the upwardly pivoted travelling position and is supported in the working position on the ground by means of its own ground running wheel (9), characterised by a locking arrangement (V), which is engageable and disengageable by the displacement of weight during the movement of the processing tool (K) between the working position and the travelling position and is initially tensioned in the disengaging direction by resilient force, for the pivotal axis (12) of the running wheel (41), the resilient force of said locking arrangement being adjusted to the difference in load between the increased load and the reduced load caused by the displacement of weight on the chassis, which difference in load acts on the running wheel (41).

2. Machine according to claim 1, characterised in that, in the event of there being a plurality of running wheels (41), a particular locking arrangement (V) is provided for each running wheel (41), the resilient force of said arrangement being adjusted to a proportion of the difference corresponding to the number of running wheels.

3. Machine according to claims 1 and 2, characterised in that the running wheel (41) is disposed on a vertical axle (16), in that the axle (16) is mounted in a guide sleeve (20) of the chassis (F) so as to be vertically displaceable and rotatable to a limited extent, in that a rotary coupling (C) is provided between the axle (16) and the guide sleeve (20), said coupling being non-rotatably connected to the guide sleeve (20) in a first vertical relative position between the axle (16) and the guide sleeve (20) and freeing the axle (16) for the rotational movement, preferably to a limited extent, in a second vertical relative position between the axle (16) and the guide sleeve (20), and in that a spring (25), which acts in opposition to the load applied to the chassis (F), is disposed between the guide sleeve (20) and the running wheel (41).

4. Machine according to claim 3, characterised in that the rotary coupling (C) has at least one radial projection member (B) on the axle (16) and at least one slide member (30) in the guide sleeve (20), in which slide member the projection member (B) constantly engages, and in that the slide member (30) has a locking member (31), which grips the projection member (B) without considerable peripheral clearance, and a pivotable member (39), which is spaced from the locking member (31) in the vertical direction and frees the projection member (B) in the peripheral direction.

5. Machine according to claim 4, characterised in that the pivotable member (39) defines the range of rotation of the projection member (B) towards each side, preferably at approx. 45°.

6. Machine according to claim 4, characterised in that lateral boundary walls (29) of the slide member (30) are configured as inclined guide ramps for the projection member (B), which ramps extend into the locking member (31), and in that the locking member (31) is at least as long as the projection member (B) in the vertical direction.

7. Machine according to claim 4, characterised in that the projection member (B) is a pin (27), which traverses the axle (16), the two free ends (28) of said pin engaging in slide members (30), which are diametrically opposed in the guide sleeve (20).

8. Machine according to claim 3, characterised in that a height blocking arrangement (D), preferably a manually operable arrangement, is additionally provided between the guide sleeve (20) and the axle (16).

9. Machine according to claim 3, characterised in that the spring (25) is an initially tensioned helical compression spring, the upper end (18) of which spring rests on an outer, rotatable abutment (24) of the guide sleeve (20), and the lower end of which spring rests on a shoulder (17) disposed on the axle (16).

10. Machine according to claim 9, characterised in that the abutment (24) or/and the shoulder (17) is (are) adjustable for the changing of the intial tension of the spring.

11. Machine according to claim 8, characterised in that the axle (16) protrudes with its upper end (18) beyond the guide sleeve (20), and in that two vertically spaced stop members, preferably bores (34, 35), are disposed in the upper end (18) of the axle (16) for a selectively convertible blocking member, preferably an insert bolt (37).

12. Machine according to claim 10, characterised in that a securing ring (33) is disposed at the upper end (18) of the axle (16) so as to be displaceable to a limited extent, and said ring has a through-bore (40) for receiving the insert bolt (37).

13. Machine according to claim 12, characterised in that a spring securing means (38) is mounted on the insert bolt (37).

## Revendications

1. Machine agricole avec un châssis (F) pouvant être accroché à un tracteur (3) avec au moins une roue de roulement (41) pouvant être pivotée autour d'un axe (12) approximativement vertical et verrouillable relativement au châssis (F) dans au moins une direction de transport définie, et avec au moins un outil de travail déplaçable au châssis (F) entre une position de travail abaissée et la position de transport pivotée vers le haut, notamment un élément tournant à dents qui prend appui dans la position de travail sur le sol au moyen d'une roue de roulement au sol propre (9), caractérisée par un dispositif de verrouillage (V) pouvant être rentré et sorti par le report de charge lors du déplacement de l'outil de travail (K) entre la position de travail et la position de transport, précontraint dans le sens de sortie par une force de ressort pour l'axe de pivotement (12) de la roue de roulement (41) dont la force de ressort est réglée à la différence agissant sur la roue de roulement (41) entre l'augmentation de la charge et la diminution de la charge résultant du report de charge au châssis.

2. Machine selon la revendication 1, caractérisée en ce qu'il est prévu dans le cas de plusieurs roues de roulement (41) pour chaque roue de roulement (41) un dispositif de verrouillage propre (V) dont la force de ressort est réglée à une part de la différence correspondant au nombre des roues de roulement.

3. Machine selon les revendications 1 et 2, caractérisée en ce que la roue de roulement (41) est disposée a un axe vertical (16), en ce que l'axe (16) est logé de façon rotative et déplaçable verticalement à un degré limité dans une boîte de guidage (20) du châssis (F), en ce qu'il est prévu entre l'axe (16) et la boîte de guidage (20) un accouplement tournant (C) qui accouple dans une première position relative verticale entre l'axe (16) et la boîte de guidage (20) l'axe (16) de façon immobile en rotation à la boîte de guidage (20) et qui libère dans une deuxième position relative verticale entre l'axe (16) et la boîte de guidage (20) l'axe (16), de préférence suivant un degré limité, pour qu'elle puisse tourner, et en ce qu'il est disposé entre la boîte de guidage (20) et la roue de roulement (41) un ressort (25) agissant contre la charge du châssis (F).

4. Machine selon la revendication 3, caractérisée en ce que l'accouplement tournant (C) présente au moins une saillie radiale (B) à l'axe (16) et au moins une coulisse (30) dans la boîte de guidage (20) dans laquelle s'engage continuellement la saillie (B), et en ce que la coulisse (30) présente une partie de verrouillage (31) entourant la saillie (B) pratiquement sans jeu et une partie pivotante (39) espacée dans la direction verticale de la partie de verrouillage (31) et libérant la saillie (B) dans la direction de pourtour.

5. Machine selon la revendication 4, caractérisée en ce que la partie pivotante (39) délimite la zone de rotation de la saillie (B) vers chaque côté, de préférence sur environ 45°, respectivement.

6. Machine selon la revendication 4, caractérisée en ce que des parois de délimitation latérales (29) de la coulisse (30) sont réalisées sous forme de rampes de guidage inclinées, rentrant dans la partie de verrouillage (31), pour la saillie (B), et en ce que la partie de verrouillage (31) est en direction verticale au moins aussi longue que la saillie (B).

7. Machine selon la revendication 4, caractérisée en ce que la saillie (B) est un boulon (27) traversant l'axe (16) dont les deux extrémités libres (28) s'engagent dans les coulisses (30) opposées diamétralement dans la boîte de guidage (20).

8. Machine selon la revendication 3, caractérisée en ce qu'il est prévu entre la boîte de guidage (20) et l'axe (16) en plus un dispositif de bloquage en hauteur (D) actionnable de préférence à la main.

9. Machine selon la revendication 3, caractérisée en ce que le ressort (25) est un ressort de pression hélicoïdal précontraint dont l'extrémité supérieure (18) prend appui contre une butée extérieure tournante (24) de la boîte de guidage (20) et dont l'extrémité inférieure prend appui sur un épaulement (17) disposé à l'axe (16).

10. Machine selon la revendication 9, caractérisée en ce que la butée (24) et/ou l'épaulement (17) sont réglables pour modifier la précontrainte du ressort.

11. Machine selon la revendication 8, caractérisée en ce que l'axe (16), par son extrémité supérieure (18), fait saillie sur la boîte de guidage (20) et en ce que, dans l'extrémité supérieure (18) de l'axe (16), deux butées espacées verticalement, de préférence des perçages (34, 35) sont disposées pour un élément de bloquage pouvant être déplacé sélectivement, de préférence un boulon enfichable (37).

12. Machine selon la revendication 10, caractérisée en ce qu'il est disposé à l'extrémité supérieure (18) de l'axe (16) un anneau de sécurité (33) de façon déplaçable suivant un degré limité qui présente un perçage traversant (40) pour le boulon enfichable (37).

13. Machine selon la revendication 12, caractérisée en ce qu'il est disposé au boulon enfichable (37) une rondelle - ressort d'arrêt (38).
